# EUROPÄISCHE PATENTSCHRIFT

(11) **EP 2 343 254 B1**
(45) Veröffentlichungstag und Bekanntmachung des Hinweises auf die Patenterteilung: **16.01.2013**
(21) Anmeldenummer: 10014626.5
(22) Anmeldetag: 15.11.2007
(51) Int. Cl.: B65G 23/08, B65G 39/09

(54) **Trommelmotor**
Drum motor
Moteur à tambour

(30) Priorität: 20.11.2006 DE 102006054576
(43) Veröffentlichungstag der Anmeldung: 13.07.2011
(62) Teilanmeldung aus: 07819827.2
(73) Patentinhaber: Interroll Holding AG, 6592 Sant' Antonino (CH)
(72) Erfinder: Huenicke, Hans-Hendrik, 39122 Magdeburg (DE)
(74) Vertreter: Müller-Boré & Partner Patentanwälte

(56) Entgegenhaltungen:
- DE-A1- 10 337 529

## Beschreibung

### Gebiet der Erfindung

Die Erfindung bezieht sich auf eine Trommelmotorantriebseinheit, einen Trommelmotor und einen Streckenförderer umfassend einen solchen Trommelmotor.

### Hintergrund der Erfindung und Stand der Technik

Es existieren verschiedene Förderanlagen, auf denen Fördergut auf Förderrollen transportiert wird. Zum Teil sind solche Förderrollen angetrieben.

Solche angetriebenen Förderrollen werden zum Beispiel in der US 6,402,653 B1 und der EP 0 752 970 B1 beschrieben.

In der Regel weisen solche Förderrollen eine durchgängige Achse auf, die aus einem oder mehreren Teilen besteht und an den Enden der Förderrollen über diese hinausreicht. Über die Enden einer solchen Achse werden die Förderrollen in der Förderanlage befestigt.

Antriebe, die in solchen Förderrollen enthalten sind, sind in der Regel konzentrisch um eine solche Achse angeordnet, das heißt, die Achse durchdringt den Antrieb von einem Ende zum anderen Ende. Die bekannten angetriebenen Förderrollen weisen in der Regel ein Element auf, mit dem die Antriebskraft der Antriebseinheit umfänglich auf das drehbare Rohr der Förderrolle, auf dem das Fördergut läuft, übertragen wird.

Zum Teil weisen solche Förderrollen ein Getriebe auf, das im Betrieb geschmiert werden muß. Um eine solche Schmierung zu gewährleisten, wird das Innere einer solchen Förderrolle z.B. bis zu einer bestimmten Höhe mit Öl gefüllt.

Die DE 103 37 529 A1 beschreibt einen Trommelmotor, der mit einer als Elektromotor ausgebildeten Antriebseinheit, einem von dem Elektromotor angetriebenen Getriebe und einer von dem Getriebe angetriebenen Abtriebseinrichtung versehen ist. Die Antriebseinheit weist zwei feststehende Achszapfen auf, die an den axial äußeren Enden längs der Achse angeordnet sind. Zwischen den Achszapfen befindet sich eine im wesentlichen zylindrisches Innengehäuse, das mit den Achszapfen drehfest verbunden ist.

### Aufgabe

Es ist eine Aufgabe der Erfindung, einen Streckenförderer mit einem Trommelmotor, einen solchen Trommelmotor und eine Trommelmotorantriebseinheit für einen solchen Trommelmotor bereitzustellen, die einfach und billig herzustellen sind, und im Betrieb einfach und kostengünstig zu warten sind.

### Lösung der Aufgabe

Die Aufgabe wird durch die Vorrichtung gemäß dem nebengeordneten Anspruch gelöst. Vorteilhafte Ausführungsformen sind in den Unteransprüchen offenbart.

Ein Aspekt, der hilfreich zum Verständnis der Erfindung ist, betrifft einen Trommelmotor, umfassend einen Trommelmantel, eine Trommelmotorantriebseinheit, ein erstes Befestigungselement und ein zweites Befestigungselement zur Befestigung des Trommelmotors in einem Förderrahmen, wobei der Trommelmantel um eine Trommelachse zumindest relativ zum ersten Befestigungselement drehbar gelagert ist, wobei die Trommelmotorantriebseinheit einen Elektromotor mit einem Stator und einem Rotor umfaßt und innerhalb des Trommelmantels angeordnet ist, wobei der Stator des Elektromotors mit dem ersten Befestigungselement drehfest verbunden ist, wobei der Rotor des Elektromotors mit dem Trommelmantel über ein Abtriebselement derart verbunden ist, daß der Trommelmantel über das Abtriebselement zumindest relativ zu dem ersten Befestigungselement um die Trommelachse drehbar antreibbar ist, wobei das Abtriebselement in bezug auf die Trommelachse auf derselben Seite der Trommelmotorantriebseinheit wie das erste Befestigungselement angeordnet ist und wobei die Drehachse des Abtriebselements nicht identisch mit der Drehachse des Rotors ist. Diese Gestaltung hat den Vorteil, daß sämtliche Teile der Trommelmotorantriebseinheit, die ein Drehmoment übertragen müssen, auf einer Seite der Trommelmotorantriebseinheit angeordnet sein können und daß das Abtriebselement nicht umfänglich an der Innenwand des Trommelmantels anliegen muß, sondern eine Antriebskraft gezielt auf einzelne Punkte des Trommelmantels übertragen kann. Dies kann z.B. vorteilhaft sein, wenn eine Verzahnung zwischen dem Trommelmantel und der Antriebseinheit vorgesehen wird. Ferner ist ein solcher Trommelmotor einfach zu montieren, da die Trommelmotorantriebseinheit von einer Seite des Trommelmantels in diesen eingeführt werden kann, so daß z.B. die andere Seite des Trommelmotors bereits fertig montiert bereitgestellt werden kann. Mit dem Begriff "drehfest" im Sinne dieses Anspruchs ist gemeint, daß über eine derart drehfeste Verbindung ein Drehmoment übertragen werden kann, wobei sich die miteinander verbundenen Teile im wesentlichen nicht gegeneinander verdrehen. Von dem Begriff sollen aber auch Verbindungen umfaßt werden, die z.B. Dämpfungselemente aufweisen, die eine Verdrehung der miteinander verbundenen Teile um einige Grad ermöglichen.

Eine weitere vorteilhafte Ausführungsform bezieht sich auf einen Trommelmotor, bei dem die Drehachse des Abtriebselements nicht identisch mit der Trommelachse ist. Ein solcher Trommelmotor weist im wesentlichen die gleichen Vorteile auf, wie der vorgenannte Trommelmotor. Je nach Konstruktionsart des Trommelmotors kann es sein, daß die Trommelachse nicht der Drehachse des Rotors entspricht.

Bevorzugt ist ferner eine Ausführungsform des Trommelmotors, bei der das Abtriebselement ein Ritzel ist, welches sich mit einer Innenverzahnung, die am Innenumfang des Trommelmantels drehfest vorgesehen ist, in Eingriff befindet. Dies hat den Vorteil, das über eine Verzahnung höherer Antriebskräfte übertragen werden können, als dies bei reibschlüssigen Verbindungen der Fall ist. Ferner ist eine Verzahnung platzsparender anzuordnen und einfacher zu montieren.

Ferner weist ein solcher Trommelmotor bevorzugt eine Gestaltung auf, bei der zwischen Trommelmantel und erstem Befestigungselement ein erstes Wälzlager und/oder eine erste Fluiddichtung vorgesehen ist. Bevorzugte Fluiddichtungen sind Gleitringdichtungen oder Wellendichtringe, die z.B. unter der Marke Simrit erhältlich sind.

Weitere vorteilhafte Aspekte einer solchen Ausführungsform können in einem Trommelmotor liegen, bei dem der Außenradius des ersten Wälzlagers und/oder der Außenradius der ersten Fluiddichtung im wesentlichen gleich oder größer ist als ein Radius, der sich von der Trommelachse zur Drehachse des Abtriebselements erstreckt und/oder gleich oder größer ist als der Radius des Fußkreises der Innenverzahnung, die am Innenumfang des Trommelmantels drehfest vorgesehen ist. Ein Vorteil dieser Gestaltung ist, daß Wälzlager mit einem verhältnismäßig großen Durchmesser auch mehr Last aufnehmen können, so daß auf einem solchen Trommelmotor schwerere Lasten transportiert werden können und/oder daß ein solcher Trommelmotor auch in Verbindung mit einem Gurt eingesetzt werden kann, da derart gestaltete Lager auch eine Gurtspannung aufnehmen können. Ferner ist zu bemerken, daß bei derart gewählten Wälzlagern auch der Innendurchmesser verhältnismäßig groß ist. Daher weist auch das erste Befestigungselement bei einer derart vorteilhaft ausgeformten Ausführungsform bevorzugt einen mit dem Innendurchmesser eines solchen Wälzlagers korrespondierenden verhältnismäßig großen Außendurchmesser auf. Durch einen solchen verhältnismäßig großen Durchmesser des ersten Befestigungselements können im radialen Querschnitt des Befestigungselements verschiedene Funktionselemente vorgesehen werden, wie z.B. Kabel mit größeren Querschnitten, mehr Kabel als herkömmlich, nämlich z.B. zur Steuerung und Regelung von zusätzlichen Funktionen (Bremsen, Drehgeber, etc.), Steckbuchsen für den Anschluß, die bevorzugt abgedichtet sind, Öleinfüllbohrungen, Gewindebohrungen zum Befestigen des Befestigungselements an einem angrenzenden Rahmen eines Streckenförderers. Ferner ist es möglich, daß ein solches erstes Befestigungselement derart gestaltet ist, daß es im wesentlichen bündig mit dem axialen Rand des Trommelmantels abschließt oder nur ein wenig über den axialen Rand des Trommelmantels hinaus steht. Dadurch wird eine kompakte Bauform des Trommelmotors ermöglicht. Dadurch kann die Einbaulänge des Trommelmotors auf ein Minimum reduziert werden. Über die Gewindebohrungen, die einfach anzubringen sind, kann der Trommelmotor in einem Blechförderrahmen mit Normteilen angebracht werden. Durch diese bevorzugte Ausführungsform wird eine optimierte Montage und Demontage im Förderer gewährleistet und es bestehen uneingeschränkte Anschlußmöglichkeiten.

Bevorzugt ist ein solcher Trommelmotor, bei dem das erste Wälzlager einen Außendurchmesser aufweist, der im wesentlichen gleich oder größer als der Durchmesser der Trommelmotorantriebseinheit ist. Hierbei liegt der Vorteil darin, das die Trommelmotorantriebseinheit bei ausgebautem Wälzlager und/oder Fluiddichtung in den Trommelmantel geschoben werden kann. In diesem Zusammenhang ist es ebenfalls bevorzugt, wenn der Kopfkreis der Verzahnung also der Durchmesser, der durch die obersten Spitzen der Innenverzahnung gebildet wird, ebenfalls gleich oder größer als der Außendurchmesser der Trommelantriebseinheit ist. Bei einer anderen bevorzugten Ausführungsform weist die Trommelmotorantriebseinheit einen Außendurchmesser auf, der geringfügig kleiner ist als der Innendurchmesser des Trommelmantels in dem Bereich, in dem die Trommelmotorantriebseinheit im montierten Zustand im Trommelmantel angeordnet ist. Bevorzugt ist der Außendurchmesser der Trommelmotorantriebseinheit etwa ein bis zwei Millimeter kleiner ist als der Innendurchmesser des Trommelmantels. Bei dieser Gestaltung könnte der Innenraum im Trommelmantel optimal ausgenutzt werden, so daß eine Trommelmotorantriebseinheit mit maximaler Leistung zum Einsatz kommen kann. In diesem Fall könnte eine erste Lagereinheit, welche die Innenverzahnung, das erste Wälzlager und die erste Fluiddichtung umfaßt, zusammen mit der Trommelmotorantriebseinheit montiert werden.

Vorzugsweise weist ein solcher Trommelmotor eine Gestaltung auf, bei der ein mit der Trommelachse im wesentlichen konzentrisches Achselement zwischen Trommelmotorantriebseinheit und Befestigungselement vorgesehen ist, welches den Stator des Elektromotors mit dem Befestigungselement in einem Sackloch des Befestigungselements drehfest festlegt. Ein solches konzentrisches Achselement ist bevorzugt stiftartig und/oder zylindrisch ausgeformt und hat bevorzugt einen Durchmesser, welcher gleich oder kleiner ist als die Differenz zwischen der Länge eines Radius von der Trommelachse auf die Drehachse des Abtriebselementes und dem Radius des Abtriebselementes, im Fall eines Ritzels also dessen Kopfkreis. Durch eine solche Gestaltung können das konzentrische Achselement und das Abtriebselement nebeneinander vorgesehen werden, ohne daß das sich drehende Abtriebselement an dem Achselement schleift. Ein solches zylindrisches Achselement kann einfach in dem Sackloch des ersten Befestigungselementes festgelegt bzw. verbunden werden. Eine drehfeste Verbindung kann über beliebige Welle-Nabe-Verbindungen bewirkt werden, bevorzugt z.B. über eine Paßfeder.

Eine weitere vorteilhafte Ausführungsform bezieht sich auf einen Trommelmotor, bei dem in dem Befestigungselement eine Kabelöffnung, insbesondere zur elektrischen Versorgung des Elektromotors, und/oder eine Steckerbuchse und/oder eine Öleinfüllöffnung vorgesehen sind. Eine derartige Gestaltung hat den Vorteil, daß ein solcher Trommelmotor einfach zu montieren und zu warten ist, da sowohl eine Steckverbindung einfach hergestellt werden kann als auch die Zugänglichkeit der Öleinfüllöffnung gewährleistet ist.

Bevorzugt ist ferner eine Ausführungsform des Trommelmotors, bei dem die Trommelantriebseinheit und der Trommelmantel über ein erstes Lager und ein Mittellager drehbar und kippfest zueinander gelagert sind, wobei das Mittellager in Richtung der Trommelachse vom ersten Lager beabstandet ist, wobei vom ersten Lager aus betrachtet in Richtung der Trommelachse hinter dem Mittellager ein zweites Lager vorgesehen ist, über das der Trommelmantel drehbar gegenüber einem an den Trommelmotor angrenzenden Förderrahmen gelagert wird, wobei die Lagerung der Trommelantriebseinheit gegenüber dem Trommelmantel unabhängig von dem zweiten Lager erfolgt. Eine solche Lagerung hat den Vorteil, daß keine Achse vorgesehen werden muß, welche sich von einem Ende des Trommelmotors zum anderen Ende erstreckt und die Trommelmotorantriebseinheit innerhalb des Trommelmantels lagert. Ferner hat diese Gestaltung den Vorteil, daß eine leichte Durchbiegung des Trommelmantels unter Last nicht zu einem Verkippen der Trommelmotorantriebseinheit gegenüber dem Trommelmantel führt. Ein weiterer Vorteil liegt darin, daß eine solche Mittellagerung zu einer Verstärkung und Stabilisierung des Trommelmantels führt.

Ferner weist ein solcher Trommelmotor bevorzugt eine Gestaltung auf, bei der das erste Lager das erste Wälzlager umfaßt. Durch eine solche Gestaltung wird eine zusätzliche Lagerung überflüssig.

Weitere vorteilhafte Aspekte einer solchen Ausführungsform können in einem Trommelmotor liegen, bei dem das zweite Lager ein zweites Wälzlager im Bereich des zweiten Befestigungselements umfaßt.

Bevorzugt ist ein solcher Trommelmotor, bei dem zwischen der ersten Fluiddichtung und dem zweiten Lager eine Mitteldichtung derart vorgesehen ist, daß im Inneren des Trommelmotors zwischen der ersten Dichtung und dem zweiten Lager ein fluiddichter Raum gebildet wird, der zumindest einen Teil der Trommelmotorantriebseinheit aufnimmt. Durch diese Gestaltung wird eine vorteilhafte Konstruktion bereitgestellt, bei der verschiedene Trommelmotoren mit unterschiedlichen Trommelmantellängen einen fluiddichten Raum auf Seiten der Trommelmotorantriebseinheit aufweisen, der bei allen verschiedenen Trommelmotoren im wesentlichen dieselbe Größe hat. Wenn bei einem solchen Trommelmotor eine Ölschmierung erforderlich sein sollte, wäre gewährleistet, daß bei jedem der verschiedenen Trommelmotoren dieselbe Ölmenge zur Befüllung des fluiddichten Raums erforderlich wäre. Die erforderliche Ölmenge ist bei Trommelmotoren mit größeren Baulängen geringer als bei herkömmlichen Trommelmotoren, so daß Öl gespart werden kann.

Vorzugsweise weist ein solcher Trommelmotors eine Gestaltung auf, bei der die Mitteldichtung eine Dichtwanne umfaßt, deren Rand durch einen abschnittsweise zylinderförmigen Rohrabschnitt gebildet wird, dessen Außendurchmesser im wesentlichen dem Innendurchmesser des Trommelmantels entspricht. Bevorzugt könnte eine solche Mitteldichtung auf der Außenseite des zylinderförmigen Rohrabschnitts eine umlaufende Nut aufweisen, in die ein O-Ring eingelegt ist, der eine Abdichtung zwischen Dichtwanne und Trommelmantel bewirkt. Alternativ könnte auch eine Preßpassung zwischen dem Trommelmantel und der Dichtwanne vorgesehen werden, die derart bemessen und/oder gestaltet ist, daß sie gleichzeitig eine dichtende und kraftübertragende Funktion hat. Alternativ zu der Dichtwanne könnte auch ein dichtendes Wälzlager, z.B. ein Rillenkugellager, vorgesehen werden, dessen Außenring in den Trommelmantel eingepaßt ist. Denkbar ist ferner, daß zusätzlich zu einem Rillenkugellager ein Wellendichtring oder ein ähnliches Dichtelement vorgesehen wird. Gegenüber diesen Alternativlösungen hat die Lösung mit der Dichtwanne den Vorteil, daß die Dichtwanne, z.B. im Spritzgußverfahren, einfach hergestellt werden kann. Außerdem dient eine solche Dichtwanne der Verstärkung des Trommelmantels im Innenbereich.

Eine weitere vorteilhafte Ausführungsform bezieht sich auf einen Trommelmotor bei dem das Mittellager ein mittleres Wälzlager umfaßt, das zwischen Trommelmotorantriebseinheit und Trommelmantel angeordnet ist, insbesondere zwischen Trommelmotorantriebseinheit und einer Innenfläche des zylinderförmigen Rohrabschnitts der Dichtwanne. Eine solche Konstruktion erleichtert die Montage der Trommelmotorantriebseinheit zusammen mit einem Wälzlager und der Dichtwanne in den Trommelmotor. Ferner kann eine Lagerfläche einfacher auf der Innenfläche der Dichtwanne hergestellt werden, als im Innenbereich des Trommelmantels.

Ein Aspekt der Erfindung betrifft einen Trommelmotor, umfassend einen Trommelmantel, eine Trommelmotorantriebseinheit, ein erstes Befestigungselement und ein zweites Befestigungselement zur Befestigung des Trommelmotors in einem Förderrahmen, wobei der Trommelmantel um eine Trommelachse zumindest relativ zum ersten Befestigungselement drehbar gelagert ist, wobei die Trommelmotorantriebseinheit einen Elektromotor mit einem Stator und einem Rotor umfaßt und innerhalb des Trommelmantels angeordnet ist, wobei der Stator des Elektromotors mit dem ersten Befestigungselement drehfest verbunden ist, wobei die Trommelantriebseinheit und der Trommelmantel über ein erstes Lager und ein Mittellager drehbar und kippfest zueinander gelagert sind, wobei das Mittellager in Richtung der Trommelachse vom ersten Lager beabstandet ist, wobei vom ersten Lager aus betrachtet in Richtung der Trommelachse hinter dem Mittellager ein zweites Lager vorgesehen ist, über das der Trommelmantel drehbar gegenüber einem an den Trommelmotor angrenzenden Förderrahmen gelagert wird und wobei die Lagerung der Trommelantriebseinheit gegenüber dem Trommelmantel unabhängig vom zweiten Lager erfolgt. In Bezug auf diesen weiteren Aspekt der Erfindung gilt im wesentlichen das oben Gesagte. Die Lagerung der Trommelmotorantriebseinheit an ihrer, dem ersten Befestigungselement abgewandten Seite im Trommelmantel hat, wie auch oben, den Vorteil, daß auch wenn das zweite Lager ausgebaut würde, die Trommelmotorantriebseinheit immer noch kippsicher gegenüber dem Trommelmantel gelagert wäre. Eine zusätzliche Lagerung der Trommelmotorantriebseinheit, z.B. über eine durchgehende Achse oder eine Achse der Trommelmotorantriebseinheit, die sich auch auf der dem ersten Befestigungselement abgewandten Seite der Trommelmotorantriebseinheit erstreckt, ist daher nicht erforderlich. Dies hat unter anderem auch den Vorteil, daß eine solche durchgehende Achse, die abhängig von der Länge des Trommelmantels wäre und daher für jede Trommellänge extra gefertigt werden müßte, nicht erforderlich ist. Auch für die im folgenden beschriebenen vorteilhaften Ausführungsformen gelten die in bezug auf die oben beschriebenen Ausführungsformen genannten Alternativen und Vorteile.

Bevorzugt ist ferner eine Ausführungsform des Trommelmotors, bei der das erste Lager zwischen dem ersten Befestigungselement und dem Trommelmantel angeordnet ist und ein erstes Wälzlager und/oder eine erste Fluiddichtung umfaßt.

Ferner weist ein solcher Trommelmotor bevorzugt eine Gestaltung auf, bei der das zweite Lager zwischen dem zweiten Befestigungselement und dem Trommelmantel angeordnet ist und ein zweites Wälzlager und/oder eine zweite Fluiddichtung umfaßt.

Weitere vorteilhafte Aspekte einer solchen Ausführungsform können in einem Trommelmotor liegen, bei dem zwischen der ersten Fluiddichtung und dem zweiten Lager eine Mitteldichtung derart vorgesehen ist, daß im Inneren des Trommelmotors zwischen der ersten Dichtung und dem zweiten Lager ein fluiddichter Raum gebildet wird, der zumindest einen Teil des Trommelmotorantriebs aufnimmt.

Bevorzugt ist ein solcher Trommelmotor, bei dem die Mitteldichtung eine Dichtwanne umfaßt, deren Rand durch einen abschnittsweise zylinderförmigen Rohrabschnitt gebildet wird, dessen Außendurchmesser im wesentlichen dem Innendurchmesser des Trommelmantels entspricht.

Vorzugsweise weist ein solcher Trommelmotor eine Gestaltung auf , bei der der Rotor des Elektromotors mit dem Trommelmantel über ein Abtriebselement derart verbunden ist, daß der Trommelmantel über das Abtriebselement zumindest relativ zu dem ersten Befestigungselement um die Trommelachse drehbar angetrieben werden kann, wobei das Abtriebselement in bezug auf die Trommelachse auf derselben Seite der Trommelmotorantriebseinheit wie das erste Befestigungselement angeordnet ist und wobei die Drehachse des Abtriebselements nicht identisch mit der Drehachse des Rotors ist.

Eine weitere vorteilhafte Ausführungsform bezieht sich auf einen Trommelmotor, bei dem die Drehachse des Abtriebselements nicht identisch mit der Trommelachse ist.

Bevorzugt ist ferner eine Ausführungsform des Trommelmotors, bei dem das Abtriebselement ein Ritzel ist, welches sich mit einer Innenverzahnung, die am Innenumfang des Trommelmantels drehfest vorgesehen ist, in Eingriff befindet.

Ferner weist ein solcher Trommelmotor bevorzugt eine Gestaltung auf, bei der der Außenradius des ersten Wälzlagers und/oder der Außenradius der ersten Fluiddichtung im wesentlichen gleich oder größer ist als ein Radius, der sich von der Trommelachse zur Drehachse des Abtriebselements erstreckt und/oder gleich oder größer ist als der Radius des Fußkreises der Innenverzahnung, die am Innenumfang des Trommelmantels drehfest vorgesehen ist.

Weitere vorteilhafte Aspekte einer solchen Ausführungsform können in einem Trommelmotor liegen, bei dem das erste Wälzlager einen Außendurchmesser aufweist, der im wesentlichen gleich oder größer als der Durchmesser der Trommelmotorantriebseinheit ist.

Bevorzugt ist ein solcher Trommelmotor, bei dem ein mit der Trommelachse im wesentlichen konzentrisches Achselement zwischen Trommelmotorantriebseinheit und Befestigungselement vorgesehen ist, welches den Stator des Elektromotors mit dem Befestigungselement in einem Sackloch des Befestigungselements drehfest festlegt bzw. verbindet.

Vorzugsweise weist ein solcher Trommelmotor eine Gestaltung auf, bei der in dem Befestigungselement eine Kabelöffnung insbesondere zur elektrischen Versorgung des Elektromotors und/oder eine Steckerbuchse und/oder eine Öleinfüllöffnung vorgesehen sind.

Eine weitere vorteilhafte Ausführungsform bezieht sich auf einen Trommelmotor, bei dem das Mittellager ein mittleres Wälzlager umfaßt, das zwischen Trommelmotorantriebseinheit und Trommelmantel angeordnet ist, insbesondere zwischen Trommelmotorantriebseinheit und einer Innenfläche des zylinderförmigen Rohrabschnitts der Dichtwanne.

Ein weiterer Aspekt betrifft einen Streckenförderer mit einem Trommelmotor nach einem der Ansprüche 1 bis 27.

Ein weiterer Aspekt der Erfindung betrifft eine Trommelmotorantriebseinheit, umfassend ein Achselement, einen Elektromotor mit einem Stator und einem Rotor, ein Getriebe mit einem Antriebselement und einem Abtriebselement, wobei das Achselement im Verhältnis zum Stator des Elektromotors drehfest angeordnet ist und auf einer ersten Seite der Trommelmotorantriebseinheit aus der Trommelmotorantriebseinheit herausgeführt ist, wobei das Abtriebselement auf der Seite des Achselements aus der Trommelmotorantriebseinheit herausgeführt ist und wobei die Drehachse des Abtriebselementes im Verhältnis zum Achselement versetzt angeordnet ist.

Hilfreich zum Verständnis der Erfindung ist ferner ein Trommelmotor umfassend einen Trommelmantel, eine Trommelmotorantriebseinheit, ein erstes Befestigungselement und ein zweites Befestigungselement zur Befestigung des Trommelmotors in einem Förderrahmen, Lager zur Lagerung des Trommelmantels auf den Befestigungselementen und zumindest ein Achselement, welches als Verbindungselement zwischen der Trommelmotorantriebseinheit und zumindest einem der Befestigungselemente dient, wobei sämtliche genannten Bestandteile des Trommelmotors außer dem Trommelmantel derart gestaltet sind, daß sie in identischer Weise in Trommelmotoren mit unterschiedlichen Mantellängen verwendbar sind, so daß das einzige längenabhängige Teil des Trommelmotors der Trommelmantel ist. In diesem Zusammenhang sind nur die wichtigsten Teile genannt, die ein solcher Trommelmotor umfaßt. Denkbar ist, daß ein solcher Trommelmotor weitere Teile umfaßt, insbesondere solche Teile, wie sie in bezug auf die anderen Aspekte der Erfindung beschrieben wurden. Insbesondere können auch solche Teile "genannte Bestandteile" im Sinn dieses Aspektes der Erfindung sein. Ein solcher Trommelmotor hat den Vorteil, daß Trommelmotoren mit unterschiedlichen Längen günstig hergestellt werden können, da die meisten Bestandteile für Trommelmotoren mit jeweils unterschiedlichen Längen identisch sind. Besonders bevorzugt ist, wenn in einem solchen Trommelmotor nur noch ein einziges Teil, insbesondere der Trommelmantel, längenabhängig hergestellt werden muß.

Im Folgenden werden einzelne besonders bevorzugte Ausführungsformen der Erfindung beispielhaft beschrieben. Dabei weisen die einzelnen beschriebenen Ausführungsformen zum Teil Merkmale auf, die nicht zwingend erforderlich sind, um die vorliegende Erfindung auszuführen, die aber im Allgemeinen als bevorzugt angesehen werden. So sollen auch Ausführungsformen als unter die Lehre der Erfindung fallend offenbart angesehen werden, die nicht alle Merkmale der im Folgenden beschriebenen Ausführungsformen aufweisen. Genauso ist es denkbar, Merkmale, die in bezug auf unterschiedliche Ausführungsformen beschrieben werden, selektiv miteinander zu kombinieren.

### Kurze Beschreibung der Zeichnungen

In den Figuren zeigt:
- Fig. 1: einen Längsschnitt durch eine bevorzugte Ausführungsform eines erfindungsgemäßen Trommelmotors und eine Seitenansicht des Trommelmotors und
- Fig. 2a und Fig. 2b: Ausschnittsvergrößerungen aus dem Längsschnitt aus Figur 1.

### Detaillierte Beschreibung der Zeichnung

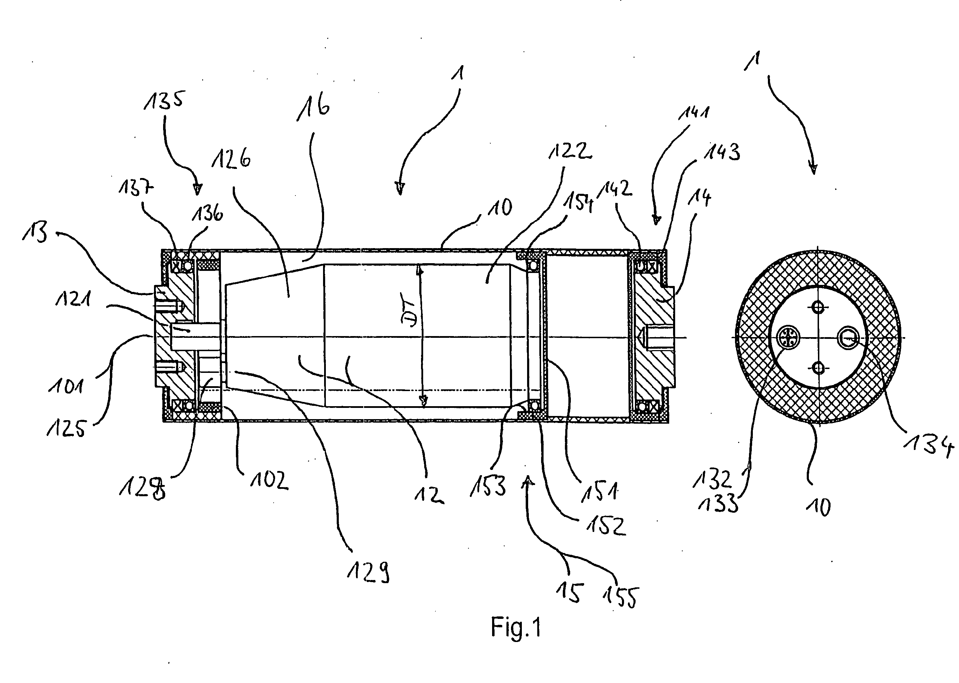

Figur 1 zeigt einen Längsschnitt durch eine bevorzugte Ausführungsform eines erfindungsgemäßen Trommelmotors und eine Seitenansicht des Trommelmotors.

Gezeigt ist ein Trommelmotor 1, der einen Trommelmantel 10, ein erstes Befestigungselement 13, ein zweites Befestigungselement 14 und eine Trommelmotorantriebseinheit 12 aufweist.

Der Trommelmantel 10 kann sich um die Befestigungselemente 13, 14 drehen. Dies wird durch ein erstes Wälzlager 136 im Bereich eines ersten Lagers 135 und durch ein zweites Wälzlager 142 im Bereich eines zweiten Lagers 141, welche den Trommelmantel auf dem ersten Befestigungselement 13 und dem zweiten Befestigungselement 14 lagern, gewährleistet. Das erste Lager 135 umfaßt ferner eine erste Fluiddichtung 137, und das zweite Lager 141 umfaßt ferner eine zweite Fluiddichtung 143. Diese Fluiddichtungen gewährleisten, daß keine Feuchtigkeit von außen in den Trommelmotor 1 eindringen kann. Zum anderen gewährleistet die Fluiddichtung 137, daß Öl, welches sich in einem fluiddichten Raum 16 befindet, nicht aus dem Trommelmotor nach außen gelangen kann.

Der Ölstand HÖ im Innenraum 16 ist derart bemessen, daß zum einen eine Schmierung des ersten und des mittleren Wälzlagers und zum anderen eine ausreichende Kühlung der Trommelmotorantriebseinheit gewährleistet ist. Hier liegt ein weiterer Vorteil der Gestaltung mit Wälzlagern mit großem Durchmesser, wonach eine verhältnismäßig geringe Füllhöhe des Öls, also ein niedriger Ölstand HÖ ausreicht, die Wälzlager zu schmieren.

Zusätzlich zu den beiden genannten Fluiddichtungen 137, 143 sind in dieser bevorzugten Ausführungsform ferner Dichtelemente axial außerhalb der jeweiligen Fluiddichtungen angeordnet, welche zusammen mit dem ersten und dem zweiten Befestigungselement 13, 14 jeweils eine Labyrinthdichtung bilden. Dabei sind die Dichtelemente bevorzugt fluiddicht in den Trommelmantel eingebracht, bevorzugt gepreßt und/oder geklebt. Dies hat den Vorteil, daß, wenn die Unterkante des Innendurchmessers des Dichtelements oberhalb des Ölstandes HÖ im Innenraum 16 liegt, selbst bei Undichtigkeit einer der Fluiddichtungen kein Öl aus dem Innenraum 16 auslaufen kann. Durch den niedrigen Ölstand HÖ, der bei dieser Gestaltung möglich ist, ist dennoch ein verhältnismäßig großer Innendurchmesser des Dichtelements gegeben, so daß auch der Durchmesser des aus dem Dichtelement herausgeführten Bereichs des Befestigungselements 13 groß gestaltet werden kann und ausreichend Platz für die Durchführung von Verkabelung etc. bietet.

Wie in Figur 1 ersichtlich ist, weisen die Befestigungselemente 13, 14 einen verhältnismäßig großen Durchmesser auf. Dadurch wird gewährleistet, das durch diese Befestigungselemente, insbesondere durch das erste Befestigungselement 131, eine Öleinfüllöffnung 134, eine Kabelöffnung 132, die bevorzugt mit einer Steckerbuchse 133 versehen ist, sowie Gewindebohrungen, über die das Befestigungselement an einem angrenzenden Lagerrahmen befestigt werden kann, vorgesehen werden können.

Insbesondere durch die genannten Gewindebohrungen kann bei dieser Ausführungsform ein Trommelmotor 1 gemäß der Erfindung einfach in einem Rahmen eines Streckenförderers angebracht werden. Anstelle solcher Gewindebohrungen können auch andere Befestigungsvorrichtungen vorgesehen werden. So ist z.B. in bezug auf das zweite Befestigungselement 14 eine einzelne Gewindebohrung dargestellt. Denkbar ist z.B. weiterhin ein einfaches Sackloch oder nur ein Auflager an einem Rahmen des Streckenförderers für das (zweite) Befestigungselement 14 und eine Fixierung in Rahmenlängsrichtung. Bevorzugt ist in diesem Zusammenhang, wenn zumindest auf der Seite des ersten Befestigungselements 13 eine Anbringung an den Lagerrahmen gewährleistet ist, die ein Verdrehen des ersten Befestigungselements verhindert, so daß das Antriebsdrehmoment auf den Rahmen übertragen werden kann.

Da in der gezeigten Ausführungsform über das zweite Befestigungselement 14 kein Drehmoment übertragen wird, ist eine solche drehfeste Verbindung auf der Seite des zweiten Befestigungselements nicht zwingend erforderlich. Das Gleiche gilt für eine Öleinfüllöffnung 134, eine Kabelöffnung 132 etc. entsprechend, die am zweiten Befestigungselement vorgesehen werden können, in bezug auf die beschriebene Ausführungsform aber an dieser Stellen nicht erforderlich sind.

Bevorzugt ist, wenn zumindest eines der Befestigungselement so gestaltet ist, daß Fluchtungs-, Parallelitäts- und Winkelfehler ausgeglichen werden können. Dies ist zum Beispiel möglich durch eine Gummilagerung und/oder durch Langlöcher am Rahmen, so daß der Trommelmotor im Rahmen zunächst ausgerichtet und dann durch Festziehen der Schrauben in den Langlöchern festgelegt werden kann.

Die in Figur 1 gezeigte Trommelmotorantriebseinheit 12 umfaßt einen Elektromotor 122 und ein Getriebe 126. Der Elektromotor 122 weist einen Stator und einen Rotor auf, die in den Figuren nicht näher dargestellt sind. Das Getriebe ist über ein nicht dargestelltes Antriebselement mit dem Motorabtrieb verbunden und wandelt die Motordrehzahl in eine Abtriebsdrehzahl um, die an einem Abtriebselement 128 des Getriebes 126 bereitsteht.

Das Abtriebselement 128 ist in dieser bevorzugten Ausführungsform als Ritzel ausgebildet. Das Ritzel kämmt mit einer Innenverzahnung 102, die am Innenumfang des Trommelmantels 10 vorgesehen ist. Die Innenverzahnung 102 ist in der dargestellten Ausführungsform an einem Ringelement vorgesehen, welches zugleich eine Dichtfläche für die erste Fluiddichtung 137 und eine Lagerfläche für das erste Wälzlager 136 aufweist. Das Ringelement ist in dem Trommelmantel 10 eingepreßt und bevorzugt im Spritzgußverfahren hergestellt. Bei höheren zu übertragenden Drehmomenten kann das Ringelement auch als Aludruckgußteil bereitgestellt werden. Andere Herstellungsverfahren sind ebenfalls denkbar. Das Ringelement kann in Abhängigkeit von den verwendeten Materialien in den Trommelmantel eingepreßt, eingeklebt und/oder eingeschweißt werden. Andere Befestigungsverfahren sind ebenfalls denkbar. Der Kopfkreis, also der Durchmesser, der über die Punkte der Innenverzahnung definiert wird, die radial am weitesten innen gelegen sind, ist in der dargestellten Ausführungsform gleich oder größer als der Durchmesser DT der Trommelmotorantriebseinheit 12 an ihrer dicksten Stelle. So kann die Trommelmotorantriebseinheit 12 in den Trommelmantel eingeschoben werden, wenn das Ringelement bereits vormontiert ist.

Auf der Seite der Trommelmotorantriebseinheit 12, die dem ersten Befestigungselement 13 gegenüberliegt, ist die Trommelmotorantriebseinheit 12 über ein Mittellager 15 in dem Trommelmantel 10 gelagert. Das Mittellager 15 umfaßt eine Dichtwanne 151 und ein mittleres Wälzlager 154. Die Dichtwanne 151 hat im wesentlichen die Form einer Untertasse. Ihr Rand ist zylinderförmig ausgebildet und in den Trommelmantel 10 eingepreßt. In der dargestellten Ausführungsform ist die Passung, mit der die Dichtwanne 151 in den Trommelmantel 10 eingepreßt ist, so gewählt, daß Dichtwanne 151 und Trommelmantel 10 gegen Fluide, insbesondere Schmieröl, abgedichtet sind.

Das mittlere Wälzlager 154 ist auf der Innenfläche des zylinderförmigen Rohrabschnitts 152 der Dichtwanne 151 gelagert. Die Rückseite der Trommelmotorantriebseinheit 12, die bevorzugt zumindest in diesem Bereich konzentrisch mit dem Trommelmantel 10 ausgebildet ist, wird über das mittlere Wälzlager 154 drehbar im Trommelmantel 10 gelagert.

Als Alternative zu dieser Konstruktionsform wäre denkbar, auf der Oberfläche der Trommelmotorantriebseinheit 12 ein Lager und eine Dichtfläche vorzusehen, so daß Mittellagerung und Dichtung nicht am axialen Ende der Trommelmotorantriebseinheit 12 vorgesehen sind, sondern weiter in Richtung des ersten Befestigungselements.

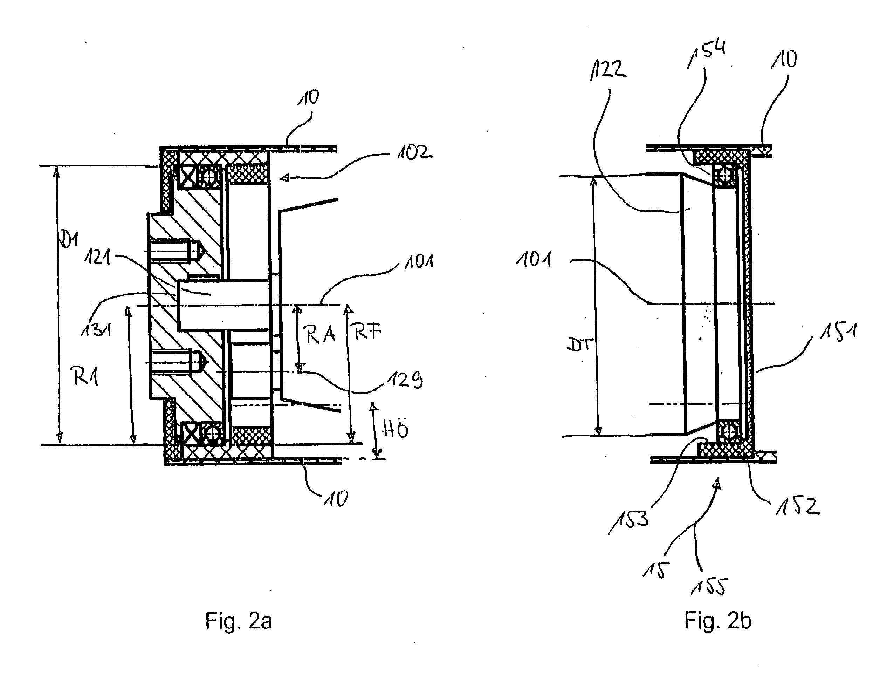

Da in Abhängigkeit von den Ausmaßen der Trommelmotorantriebseinheit 12 in jedem Trommelmotor 1 bis auf den Trommelmantel 10 dieselben Teile verwendet werden können, sind diese besonders günstig herzustellen. Außerdem ist auch der fluiddichte Raum 16, der zwischen dem ersten Befestigungselement 13, der Dichtwanne 151 und dem Trommelmantel 10 gebildet wird, in solchen Trommelmotoren immer gleich groß. Dadurch ist immer dieselbe Ölmenge erforderlich, die zur Schmierung von Ritzel und Innenverzahnung und/oder Getriebe 126 eingefüllt wird. In Figur 2a ist der Ölfüllstand mit dem Bezugszeichen HÖ bezeichnet.

Figuren 2a und 2b zeigen Ausschnittsvergrößerungen aus dem Längsschnitt aus Figur 1.

In Figur 2a ist der Bereich des Trommelmotors 1 im Bereich des ersten Befestigungselements 13 vergrößert gezeigt. Die um die Trommelachse 101 umlaufenden Teile sind mit einer Kreuzschraffur gezeigt. Dargestellt sind u. a. verschiedene Radien und Durchmesser. Mit dem Bezugszeichen RF wird der Radius zwischen Trommelachse 101 und dem Fußkreis der Innenverzahnung 102 bezeichnet. Der Fußkreis ist der Kreis eine Verzahnung, der durch die tiefsten Punkte im Zahngrund zwischen jeweils zwei Zähnen verläuft.

Der Radius, der sich von der Trommelachse 101 zur Drehachse des Abtriebselements 129 erstreckt, ist mit dem Bezugszeichen RA bezeichnet. Da sich das Abtriebselement 128 in der dargestellten Ausführungsform hinter der Zeichnungsebene befinden kann, kann dieser Radius größer sein als in der Projektion dargestellt.

In Figur 2b ist der Bereich des Mittellagers 15 aus Figur 1 vergrößert dargestellt. Hier ist gut ersichtlich, daß der Trommelmantel mit verschiedenen Durchmessern ausgebildet ist, die einen Absatz im Bereich des Mittellagers bilden. Die Dichtwanne 151 ist auf diesen Absatz aufgeschoben und wird durch diesen axial in Richtung des zweiten Befestigungselements fixiert.

### Bezugszeichenliste

- 1: Trommelmotor
- 10: Trommelmantel
- 101: Trommelachse
- 102: Innenverzahnung
- 12: Trommelmotorantriebseinheit
- 121: konzentrisches Achselement
- 122: Elektromotor
- 125: Drehachse des Rotors
- 126: Getriebe
- 128: Abtriebselement
- 129: Drehachse des Abtriebselements
- 13: erstes Befestigungselement
- 131: Sackloch
- 132: Kabelöffnung
- 133: Steckerbuchse
- 134: Öleinfüllöffnung
- 135: erstes Lager
- 136: erstes Wälzlager
- 137: erste Fluiddichtung
- 14: zweites Befestigungselement
- 141: zweites Lager
- 142: zweites Wälzlager
- 143: zweite Fluiddichtung
- 15: Mittellager
- 151: Dichtwanne
- 152: zylinderförmiger Rohrabschnitt
- 153: Innenfläche des zylinderförmigen Rohrabschnitts der Dichtwanne
- 154: mittleres Wälzlager
- 155: Mitteldichtung
- 16: fluiddichter Raum
- 2: Förderrahmen
- R1: Außenradius des ersten Wälzlagers
- RA: Radius, der sich von der Trommelachse zur Drehachse des Abtriebselements erstreckt
- RF: Radius des Fußkreises der Innenverzahnung
- RT: Radius der Trommelmotorantriebseinheit
- DT: Durchmesser der Trommelmotorantriebseinheit
- HÖ: Ölstand

## Patentansprüche

1. Trommelmotor (1) umfassend einen Trommelmantel (10), eine Trommelmotorantriebseinheit (12), ein erstes Befestigungselement (13) und ein zweites Befestigungselement (14) zur Befestigung des Trommelmotors (1) in einem Förderrahmen,
wobei der Trommelmantel (10) um eine Trommelachse (101) zumindest relativ zum ersten Befestigungselement (13) drehbar gelagert ist,
wobei die Trommelmotorantriebseinheit (12) einen Elektromotor (122) mit einem Stator und einem Rotor umfaßt und innerhalb des Trommelmantels (10) angeordnet ist,
wobei der Stator des Elektromotors (122) mit dem ersten Befestigungselement (13) drehfest verbunden ist,
wobei die Trommelantriebseinheit und der Trommelmantel (10) über ein erstes Lager (135) und ein Mittellager drehbar und kippfest zueinander gelagert sind,
wobei das Mittellager in Richtung der Trommelachse (101) vom ersten Lager (135) beabstandet ist,
wobei vom ersten Lager (135) aus betrachtet in Richtung der Trommelachse (101) hinter dem Mittellager ein zweites Lager (141) vorgesehen ist, über das der Trommelmantel (10) drehbar gegenüber einem an den Trommelmotor (1) angrenzenden Förderrahmen gelagert wird,
wobei die Lagerung der Trommelantriebseinheit gegenüber dem Trommelmantel (10) unabhängig von dem zweiten Lager (141) erfolgt.

2. Trommelmotor (1) nach Anspruch 1, wobei das erste Lager (135) zwischen dem ersten Befestigungselement (13) und dem Trommelmantel (10) angeordnet ist und ein erstes Wälzlager (136) und/oder eine erste Fluiddichtung (137) umfaßt.

3. Trommelmotor (1) nach Anspruch 1 oder 2, wobei das zweite Lager (141) zwischen dem zweiten Befestigungselement (14) und dem Trommelmantel (10) angeordnet ist und ein zweites Wälzlager (142) und/oder eine zweite Fluiddichtung (143) umfaßt.

4. Trommelmotor (1) nach einem der Ansprüche 1 bis 3, wobei zwischen der ersten Fluiddichtung (137) und dem zweiten Lager (141) eine Mitteldichtung (155) derart vorgesehen ist, daß im Inneren des Trommelmotors (1) zwischen der ersten Dichtung und dem zweiten Lager (141) ein fluiddichter Raum (16) gebildet wird, der zumindest einen Teil des Trommelmotorantriebs aufnimmt.

5. Trommelmotor (1) nach Anspruch 4, wobei die Mitteldichtung (155) eine Dichtwanne (151) umfaßt, deren Rand durch einen zumindest abschnittsweise zylinderförmigen Rohrabschnitt (152) gebildet wird, dessen Außendurchmesser im wesentlichen dem Innendurchmesser des Trommelmantels (10) entspricht.

6. Trommelmotor (1) nach einem der Ansprüche 1 bis 5, wobei der Rotor des Elektromotors (122) mit dem Trommelmantel (10) über ein Abtriebselement (128) derart verbunden ist, daß der Trommelmantel (10) über das Abtriebselement (128) zumindest relativ zu dem ersten Befestigungselement (13) um die Trommelachse (101) drehbar angetrieben werden kann,
wobei das Abtriebselement (128) in bezug auf die Trommelachse (101) auf derselben Seite der Trommelmotorantriebseinheit (12) wie das erste Befestigungselement (13) angeordnet ist,
wobei die Drehachse (129) des Abtriebselements (128) nicht identisch mit der Drehachse des Rotors (125) ist.

7. Trommelmotor nach Anspruch 6, wobei die Drehachse (129) des Abtriebselements (128) nicht identisch mit der Trommelachse (101) ist.

8. Trommelmotor nach Anspruch 6 oder 7, wobei das Abtriebselement (128) ein Ritzel ist, welches sich mit einer Innenverzahnung, die am Innenumfang des Trommelmantels (10) drehfest vorgesehen ist, in Eingriff befindet.

9. Trommelmotor (1) nach einem der Ansprüche 6 oder 8, wobei der Außenradius des ersten Wälzlagers (136) im Wesentlichen gleich oder größer ist als ein Radius, der sich von der Trommelachse (101) zur Drehachse (129) des Abtriebselements (128) erstreckt.

10. Trommelmotor (1) nach einem der Ansprüche 6, 8 oder 9, wobei der Außenradius der ersten Fluiddichtung (137) im Wesentlichen gleich oder größer ist als ein Radius, der sich von der Trommelachse (101) zur Drehachse (129) des Abtriebselements (128) erstreckt.

11. Trommelmotor (1) nach einem der Ansprüche 6, 8, 9 oder 10, wobei der Außenradius des ersten Wälzlagers (136) gleich oder größer ist als der Radius des Fußkreises der Innenverzahnung, die am Innenumfang des Trommelmantels (10) drehfest vorgesehen ist.

12. Trommelmotor (1) nach einem der Ansprüche 2 bis 11, wobei das erste Wälzlager (136) einen Außendurchmesser aufweist, der im wesentlichen gleich oder größer als der Durchmesser der Trommelmotorantriebseinheit (12) ist.

13. Trommelmotor (1) nach einem der Ansprüche 1 bis 12, wobei ein mit der Trommelachse (101) im wesentlichen konzentrisches Achselement (121)
zwischen Trommelmotorantriebseinheit (12) und erstem Befestigungselement (13) vorgesehen ist, welches den Stator des Elektromotors (122) mit dem ersten Befestigungselement (13) in einem Sackloch (131) des ersten Befestigungselements (13) drehfest festlegt.

14. Trommelmotor (1) nach einem der vorstehenden Ansprüche, wobei in dem ersten Befestigungselement (13) eine Kabelöffnung (132), insbesondere zur elektrischen Versorgung des Elektromotors (122), und/oder eine Steckerbuchse (133) und/oder eine Öleinfüllöffnung (134) vorgesehen sind.

15. Trommelmotor (1) nach einem der vorstehenden Ansprüche, wobei bei dem Trommelmotor (1) das Mittellager ein mittleres Wälzlager (154) umfaßt, das zwischen Trommelmotorantriebseinheit (12) und Trommelmantel (10) angeordnet ist.

## Claims

1. A barrel motor (1) comprising a barrel casing (10), a barrel motor drive unit (12), a first mounting element (13) and a second mounting element (14) for mounting the barrel motor (1) in a conveyer frame,
wherein the barrel casing (10) is rotatably supported about a barrel axis (101) at least relative to the first mounting element (13),
wherein the barrel motor drive unit (12) comprises an electric motor (122) having a stator and a rotor, and is arranged within the barrel casing (10),
wherein the stator of the electric motor (122) is connected to the first mounting element (13) in a torque-proof manner,
wherein the barrel drive unit and the barrel casing (10) are supported via a first bearing (135) and a center bearing such that they can rotate with respect to one another and cannot tilt with respect to one another,
wherein the center bearing is at a distance from the first bearing (135) in the direction of the barrel axis (101),
wherein, viewed from the first bearing (135) in the direction of the barrel axis (101), a second bearing (141) is provided behind the center bearing, via which second bearing (141) the barrel casing (10) is rotatably supported with respect to a conveyer frame, which is adjacent to the barrel motor (1), and
wherein the barrel drive unit is supported with respect to the barrel casing (10) independently of the second bearing (141).

2. The barrel motor (1) as claimed in claim 1, wherein the first bearing (135) is arranged between the first mounting element (13) and the barrel casing (10) and comprises a first roller bearing (136) and/or a first fluid seal (137).

3. The barrel motor (1) as claimed in claim 1 or 2, wherein the second bearing (141) is arranged between the second mounting element (14) and the barrel casing (10), and comprises a second roller bearing (142) and/or a second fluid seal (143).

4. The barrel motor (1) as claimed in one of claims 1 to 3, wherein a center seal (155) is provided between the first fluid seal (137) and the second bearing (141) such that a fluid-tight space (16), which accommodates at least a portion of the barrel motor drive, is formed between the first seal and the second bearing (141) in the interior of the barrel motor (1).

5. The barrel motor (1) as claimed in claim 4, wherein the center seal (155) comprises a sealing trough (151) whose rim is formed by a tubular section (152) which is cylindrical at least in places and whose external diameter corresponds essentially to the internal diameter of the barrel casing (10).

6. The barrel motor (1) as claimed in one of claims 1 to 5, wherein the rotor of the electric motor (122) is connected to the barrel casing (10) via an output drive element (128), such that the barrel casing (10) can be driven via the output drive element (128) at least relative to the first mounting element (13), such that it can rotate about the barrel axis (101),
wherein the output drive element (128) is arranged on the same side of the barrel motor drive unit (12) as the first mounting element (13) with respect to the barrel axis (101),
and wherein the rotation axis (128) of the output drive element (129) is not identical to the rotation axis of the rotor (125).

7. The barrel motor as claimed in claim 6, wherein the rotation axis (129) of the output drive element (128) is not identical to the barrel axis (101).

8. The barrel motor as claimed in one of claims 6 or 7, wherein the output drive element (128) is a pinion which engages with an internal tooth system which is provided on the internal circumference of the barrel casing (10) in a torque-proof manner.

9. The barrel motor (1) as claimed in one of claims 6 or 8, wherein the external radius of the first roller bearing (136) is essentially equal to or greater than a radius which extends from the barrel axis (101) to the rotation axis (129) of the output drive element (128).

10. The barrel motor (1) as claimed in one of claims 6, 8, or 9, wherein the external radius of the first fluid seal (137) is essentially equal to or greater than a radius which extends from the barrel axis (101) to the rotation axis (129) of the output drive element (128).

11. The barrel motor (1) as claimed in one of claims 6, 8, 9, or 10, wherein the external radius of the first roller bearing (136) is essentially equal to or greater than the radius of the root circle of the internal tooth system, which is provided on the internal circumference of the barrel casing (10) in a torque-proof manner.

12. The barrel motor (1) as claimed in one of claims 2 to 11, wherein the first roller bearing (136) has an external diameter which is essentially equal to or greater than the diameter of the barrel motor drive unit (12).

13. The barrel motor (1) as claimed in one of claims 1 to 12, wherein an axle element (121) which is essentially concentric with the barrel axis (101) is provided between the barrel motor drive unit (12) and the first mounting element (13) and fixes the stator of the electric motor (122) by means of the first mounting element (13) in a blind hole (131) of the first mounting element (13) in a torque-proof manner.

14. The barrel motor (1) as claimed in one of the preceding claims, wherein a cable opening (132), in particular for the electrical supply for the electric motor (122), and/or a plug socket (133) and/or an oil filling opening (134) are/is provided in the first mounting element (13).

15. The barrel motor (1) as claimed in one of the preceding claims, wherein in the barrel motor (1) the center bearing comprises a central roller bearing (154) which is arranged between the barrel motor drive unit (12) and the barrel casing (10).

## Revendications

1. Moteur de tambour (1) comprenant une enveloppe de tambour (10), un module d'entraînement de moteur de tambour (12), un premier élément de fixation (13) et un second élément de fixation (14) pour la fixation du moteur de tambour (1) dans un châssis de transport,
dans lequel l'enveloppe de tambour (10) est logée à rotation autour d'un axe de tambour (101) au moins par rapport au premier élément de fixation (13),
dans lequel le module d'entraînement de moteur de tambour (12) comprend un moteur électrique (122) avec un stator et un rotor et est disposé au sein de l'enveloppe de tambour (10),
dans lequel le stator du moteur électrique (122) est relié de manière fixe en rotation au premier élément de fixation (13),
dans lequel le module d'entraînement de tambour et l'enveloppe de tambour (10) sont logés à rotation et de manière fixe en basculement l'un par rapport à l'autre par le biais d'un premier palier (135) et d'un palier central,
dans lequel le palier central est espacé du premier palier (135) en direction de l'axe de tambour (101),
dans lequel un second palier (141) est prévu derrière le palier central en direction de l'axe de tambour (101), vu depuis le premier palier (135), par le biais duquel l'enveloppe de tambour (10) est logée à rotation par rapport à un châssis de transport adjacent au moteur de tambour (1),
dans lequel le logement du module d'entraînement de tambour par rapport à l'enveloppe de tambour (10) s'effectue indépendamment du second palier (141).

2. Moteur de tambour (1) selon la revendication 1, dans lequel le premier palier (135) est disposé entre le premier élément de fixation (13) et l'enveloppe de tambour (10), et comprend un premier palier à roulement (136) et/ou un premier joint fluidique (137).

3. Moteur de tambour (1) selon la revendication 1 ou 2, dans lequel le second palier (141) est disposé entre le second élément de fixation (14) et l'enveloppe de tambour (10), et comprend un second palier à roulement (142) et/ou un second joint fluidique (143).

4. Moteur de tambour (1) selon l'une quelconque des revendications 1 à 3, dans lequel un joint central (155) est prévu entre le premier joint fluidique (137) et le second palier (141) de sorte qu'un espace étanche aux fluides (16), qui reçoit au moins une partie de l'entraînement de moteur de tambour, est formé à l'intérieur du moteur de tambour (1) entre le premier joint et le second palier (141).

5. Moteur de tambour (1) selon la revendication 4, dans lequel le joint central (155) comprend une cuve d'étanchéité (151) dont le bord est formé par une section de tuyau (152) cylindrique au moins par sections, dont le diamètre externe correspond essentiellement au diamètre interne de l'enveloppe de tambour (10).

6. Moteur de tambour (1) selon l'une quelconque des revendications 1 à 5, dans lequel le rotor du moteur électrique (122) est relié à l'enveloppe de tambour (10) par le biais d'un élément de sortie (128) de sorte que l'enveloppe de tambour (10) peut être entraînée en rotation autour de l'axe de tambour (101) par le biais de l'élément de sortie (128) au moins par rapport au premier élément de fixation (13),
dans lequel l'élément de sortie (128) est disposé sur le même côté du module d'entraînement de moteur de tambour (12) que le premier élément de fixation (13) par rapport à l'axe de tambour (101),
dans lequel l'axe de rotation (129) de l'élément de sortie (128) n'est pas identique à l'axe de rotation du rotor (125).

7. Moteur de tambour selon la revendication 6, dans lequel l'axe de rotation (129) de l'élément de sortie (128) n'est pas identique à l'axe de tambour (101).

8. Moteur de tambour selon la revendication 6 ou 7, dans lequel l'élément de sortie (128) est un pignon qui se trouve en engagement avec une denture interne qui est prévue de manière fixe en rotation sur la périphérie interne de l'enveloppe de tambour (10).

9. Moteur de tambour (1) selon l'une quelconque des revendications 6 ou 8, dans lequel le rayon externe du premier palier à roulement (136) est essentiellement égal ou supérieur à un rayon qui s'étend de l'axe de tambour (101) à l'axe de rotation (129) de l'élément de sortie (128).

10. Moteur de tambour (1) selon l'une quelconque des revendications 6, 8 ou 9, dans lequel le rayon externe du premier joint fluidique (137) est essentiellement égal ou supérieur à un rayon qui s'étend de l'axe de tambour (101) à l'axe de rotation (129) de l'élément de sortie (128).

11. Moteur de tambour (1) selon l'une quelconque des revendications 6, 8, 9 ou 10, dans lequel le rayon externe du premier palier à roulement (136) est égal ou supérieur au rayon du cercle de pied de la denture interne qui est prévue de manière fixe en rotation sur la périphérie interne de l'enveloppe de tambour (10).

12. Moteur de tambour (1) selon l'une quelconque des revendications 2 à 11, dans lequel le premier palier à roulement (136) présente un diamètre externe qui est essentiellement égal ou supérieur au diamètre du module d'entraînement de moteur de tambour (12).

13. Moteur de tambour (1) selon l'une quelconque des revendications 1 à 12, dans lequel un élément axial (121) essentiellement concentrique avec l'axe de tambour (101) est prévu entre le module d'entraînement de moteur de tambour (12) et le premier élément de fixation (13), lequel fixe le stator du moteur électrique (122) de manière fixe en rotation avec le premier élément de fixation (13) dans un trou borgne (131) du premier élément de fixation (13).

14. Moteur de tambour (1) selon l'une quelconque des revendications précédentes, dans lequel une ouverture de câble (132), notamment pour l'alimentation électrique du moteur électrique (122), et/ou un contact femelle (133) et/ou une ouverture de remplissage d'huile (134) sont prévus dans le premier élément de fixation (13).

15. Moteur de tambour (1) selon l'une quelconque des revendications précédentes, dans lequel, dans le cas du moteur à tambour (1), le palier central comprend un palier à roulement central (154) qui est disposé entre le module d'entraînement de moteur de tambour (12) et l'enveloppe de tambour (10).
